Europäisches Patentamt

European Patent Office

Office européen des brevets

(19)

(11) Veröffentlichungsnummer: **0 219 046 B1**

(12) **EUROPÄISCHE PATENTSCHRIFT**

(45) Veröffentlichungstag der Patentschrift: 08.01.92

(51) Int. Cl.⁵: **C08F 8/30**, C08G 59/42, C08G 12/46

(21) Anmeldenummer: 86113881.6

(22) Anmeldetag: 07.10.86

(54) **Lagerstabile, in organischem Lösemittel gelöste oder dispergierte vernetzbare Zusammensetzungen, ihre Herstellung und Verwendung.**

(30) Priorität: 11.10.85 DE 3536262

(43) Veröffentlichungstag der Anmeldung:
22.04.87 Patentblatt 87/17

(45) Bekanntmachung des Hinweises auf die
Patenterteilung:
08.01.92 Patentblatt 92/02

(84) Benannte Vertragsstaaten:
AT DE ES FR GB IT NL SE

(56) Entgegenhaltungen:
EP-A- 0 003 516      EP-A- 0 096 940
FR-A- 1 212 707      US-A- 3 025 265
US-A- 3 770 700      US-A- 4 171 413
US-A- 4 210 565      US-A- 4 250 070

(73) Patentinhaber: **BASF Aktiengesellschaft**
**Carl-Bosch-Strasse 38**
**W-6700 Ludwigshafen(DE)**

(72) Erfinder: **Blum, Rainer**
**Bannwasserstrasse 58**
**W-6700 Ludwigshafen(DE)**
Erfinder: **Rehmer, Gerd, Dr.**
**Koenigsberger Strasse 1**
**W-6712 Bobenheim-Roxheim(DE)**
Erfinder: **Osterloh, Rolf, Dr.**
**Am Wehrhaus 16a**
**W-6718 Gruenstadt(DE)**
Erfinder: **Druschke, Wolfgang, Dr.**
**Berliner Strasse 28**
**W-6716 Dirmstein(DE)**
Erfinder: **Sander, Hans, Dr.**
**Petersstrasse 2**
**W-6700 Ludwigshafen(DE)**

## Beschreibung

Die vorliegende Erfindung betrifft in organischem Lösemittel gelöste oder dispergierte lagerstabile, nach Lösemittelabgabe bei Raumtemperatur oder bei Erwärmen vernetzende polymere Zusammensetzungen, Verfahren zu deren Herstellung sowie deren Verwendung.

Der Wunsch, Hydrazide bzw. Polyhydrazide und andere polymere Hydrazinabkömmlinge wegen ihrer vielfältigen Reaktionsmöglichkeiten technisch einzusetzen, z.B. für Klebe- und Dichtungsmittel oder dekorative und schützende Überzuge u.v.a., wird deutlich durch eine Reihe von Patentanmeldungen und Druckschriften, welche Herstellung und Verwendung polymerer Hydrazide beschreiben.

In der US-PS 4 171 413 wird die Herstellung von Polyacrylathydraziden beschrieben und auf die Schwierigkeit hingewiesen, hydrazinfreie Polyacrylhydrazide durch Umsetzung von Polyacrylaten mit Hydrazin zu erhalten, da bei hoher Temperatur, die für eine möglichst vollständige Umsetzung notwendig ist, die Produkte vorzeitig gelieren.

In der EP 0 003 516 (US-A-4 250 070) werden wäßrige Polyacrylatdispersionen beschrieben, die in der Wasserphase wasserlösliche Hydrazide sowie einen Zusatz von Schwermetallionen enthalten. Der Zusatz von Schwermetallionen verhindert, daß sich aus den Hydraziden freies Hydrazin bildet. Die eingesetzten Hydrazide müssen hydrazinfrei sein. Methoden, hydrazinfreie Hydrazide oder hydrazinfreie Hydrazidlösungen zu erhalten, werden nicht angegeben.

Aus der US-A-4 210 565 sind Lösungen oder Dispersionen von Carbonylgruppen enthaltenden Polymeren bekannt, denen Polyhydrazide oder Polyhydrazone als Vernetzer zugesetzt sind.

In der US-PS 4 171 413 wird eine destillative Methode vorgeschlagen, mit der in Hydrazinolyseprodukten von Polyacrylestern ein Resthydrazingehalt von unter 1 % erreicht werden soll.

Trotz der in diesen Schriften genannten Vorteile der Verwendung von Hydraziden und Polyhydraziden bzw. polymeren Hydrazidabkömmlingen haben solche Produkte nur wenig technische Verwendung gefunden.

Der Haupthinderungsgrund ist darin zu sehen, daß Hydrazin hochgiftig und krebserzeugend ist, d.h. für eine technische Verwendung darf in solchen Produkten kein freies Hydrazin mehr vorhanden sein und es sind extreme und teure Sicherheitsvorkehrungen erforderlich.

Soweit in der Literatur das Problem des freien Hydrazins in Zubereitungen für das Gebiet der Beschichtungs-, Verklebungs- und Dichtungsmittel überhaupt erwähnt wird, handelt es sich um Hinweise darauf, daß Hydrazin giftig ist und der Gehalt an freiem Hydrazin klein gehalten werden soll.

Ein weiterer Hinderungsgrund, der der Verwendung von polymeren Polyhyraziden und monomeren Polyhydraziden aus Lösungen, besonders auf dem Gebiet der Überzugs-, Verklebungs- und Dichtungsmittel entgegensteht, ist die Neigung solcher Lösungen, auf Grund von Wasserstoffbrückenbindungen und anderen Selbstvernetzungsreaktionen zu gelieren oder bei Lagerung ihre Viskosität in einem anwendungstechnisch nicht mehr tolerierbaren Ausmaß zu erhöhen.

Aufgabe der vorliegenden Erfindung ist es, eine neue Möglichkeit aufzuzeigen, um zu möglichst hydrazinfreien, in Lösungen bzw. Dispersionen lagerstabilen Systemen zu kommen, die trotzdem die in der zitierten Literatur genannten und weitere dem Fachmann bekannte, für Polyhydrazide typischen Vernetzungsfunktionen besitzen, insbesondere für die Anwendung auf dem Gebiet der Beschichtungs-, Verklebungs- und Dichtungsmittel.

Wegen des vermuteten cancerogenen Potentials des Hydrazins kann ein Resthydrazingehalt überhaupt für viele Anwendungsgebiete nicht akzeptiert werden.

Hier liegt ein besonderer Vorteil der vorliegenden Erfindung, da sie zur Einführung der Hydrazidstruktur in die Polymeren (A) nicht von Hydrazin, sondern von Hydraziden ausgeht, die im Falle z.B. kritalliner Hydrazide, wie Adipinsäurebishydrazid, Bernsteinsäurebishydrazid oder Phthalsäurebishydrazid leicht durch Umkristallisieren zu reinigen sind.

Gegenstand der Erfindung sind in Lösung oder Dispersion eines oder mehrerer organischer Lösemittel lagerstabile, nach Lösemittelabgabe bei Raumtemperatur oder bei Erwärmen, z.B. bis zu 100°C vernetzende durch Umsetzung von

(A) polymeren organischen Verbindungen mit Carbonylgruppen,

in Gegenwart von

(B) Monoketonen und/oder Monoaldehyden

mit

(C) Polyhydraziden

erhaltene polymere Zusammensetzungen.

Die so erhaltenen Umsetzungsprodukte vernetzen entweder nach Verdampfen der Monoketone und/oder Monoaldehyde (B) mit sich selbst, nämlich dann, wenn nicht alle Carbonylgruppen der polymeren organischen Verbindung (A) mit Polyhadraziden (C) umgesetzt wurden, oder die so erhaltenen Umsetzungsprodukte können als Vernetzer verwendet werden.

Die erfindungsgemäßen polymeren Zusammensetzungen lassen sich als Reaktionspartner für weitere carbonylgruppenhaltige Polymere verwenden, die von gleicher Zusammensetzung sein können, wie die Komponente (A) oder aber von diesen verschieden sein können.

Die erfindungsgemäßen polymeren Zusammensetzungen lassen sich auch als Vernetzer für Polyepoxidverbindungen verwenden. Die Polyepoxide können dabei höhermolekulare harzartige feste und/oder flüssige Stoffe sein oder niedermolekulare Stoffe, die dann als Vernetzer für die erfindungsgemäßen polymeren Zusammensetzungen angesehen werden können.

Die lagerstabilen Lösungen der erfindungsgemäßen Produkte lassen sich z.B. bei einer typischen Verwendung als Härter für Epoxidlacke für die Beschichtung von Industriefußböden einsetzen, wobei besondere Schutzmaßnahmen für die Verarbeiter, über die für Lacke üblichen hinaus, nicht notwendig sind. Vernetzerlösungen, die noch freies Hydrazin enthalten, sind für solche Zwecke z.B. nicht anwendbar.

Die erfindungsgemäßen polymeren Zusammensetzungen sind in Monoketone- und/oder monoaldehydhaltigen Lösungen bzw. Dispersionen lagerstabil und vernetzen beim Auftrocknen der Lösungen bzw. Dispersionen nach Abdampfen der Monoketone und/oder Monoaldehyde spontan bei Raumtemperatur oder bei leicht erhöhter Temperatur. Deren Vernetzungsprinzip ist die Reaktion von Hydrazid- und/oder Hydrazon- und/oder Hydrazinocarbinol-Gruppen mit Carbonylgruppen, wobei die Hydrazid-, Hydrazon- und/oder Hydrazinocarbinolgruppen über Hydrazon- und/oder Hydrazinocarbinol-Gruppen an die Polymeren gebunden sind.

Die Carbonylgruppen können dabei an den gleichen Polymerketten vorhanden sein wie die Hydrazid- und/oder Hydrazon und/oder Hydrazinocarbinol-Gruppen oder an anderen Polymerketten.

Zu den Aufbaukomponenten der erfindungsgemäßen Zusammensetzungen ist im einzelnen folgendes auszuführen:

(A) Polymere organische Verbindungen mit Carbonylgruppen können in üblicher Weise nach dem Stand der Technik nach verschiedenen Prinzipien erhalten werden. Diese polymeren organischen Verbindungen (A) an sich und ihre Gewinnung sind nicht Gegenstand der vorliegenden Erfindung. Im folgenden werden nur Beispiele für solche Stoffe angeführt. Diese Aufzählung ist nicht vollständig und dient nur der Erläuterung.

Geeignet sind z.B. Polymere, die durch Copolymerisation eingeführte Carbonylgruppen enthalten.

Dazu gehören Copolymerisate von
a) carbonylgruppenfreien Monomeren oder Monomerengemische z.B. von (Meth)-acrylsäureestern von Alkoholen mit 1 bis 20 Kohlenstoffatomen, wie Methyl-, Ethyl-, Propyl-, n-, i- und t-Butyl-, Cyclohexyl-, 2-Ethylhexyl-, Decyl-, Lauryl- und Stearyl-acrylat oder -methacrylat, Vinylestern von 1 bis 20 Kohlenstoffatome enthaltenden Carbonsäuren, wie Vinylformiat, -acetat, -propionat, -butyrat, -laurat und -stearat, Vinylethern mit bis 22 Kohlenstoffatomen, wie Methyl-, Ethyl-, Butyl-, Hexyl-, Octadecylvinylether, Vinylaromaten mit 8 bis 12 Kohlenstoffatomen, wie Styrol, Methylstyrol, Vinyltoluole, t-Butylstyrol, Halogenstyrole, Olefinen mit 2 bis 20 Kohlenstoffatomen, wie Ethylen, Propylen, n- und i-Butylen, Diisobuten, Triisobuten, Oligopropylene, Vinylhalogeniden wie Vinylchlorid, -bromid und Vinylidenchlorid, Allylethern, Allylalkoholen und/oder Allylestern, unter
b) Mitverwendung copolymerisierbarer Carbonylverbindungen, z.B. α,β-monoolefinisch ungesättigter Aldehyde und/oder Ketone, wie Acrolein, Methacrolein, Vinylalkylketone mit 1 bis 20 Kohlenstoffatomen im Akylrest, Formylstyrol, (Meth)acryloxyalkanale und -alkanone, deren Herstellung z.B. in der DE-OS 27 22 097 beschrieben ist, N-Oxoalkyl-(meth)acrylamide, wie sie u.a. in der U-PS 4 266 007, der DE-OS 20 61 213 oder der DE-OS 22 07 209 beschrieben sind, z.B. N-3-Oxobutyl-acrylamid und -methacrylamid, N-1,1-Dimethyl-3-oxobutyl(meth)acrylamid, Diaceton(meth)acrylamid, sowie N-3-Oxo-1,1-dibutyl-2-propyl-hexylacrylamid, ferner Acetonyl- und Diaceton(meth)acrylat, Acrylamidopivalinaldehyd oder Gemische dieser Comonomeren einpolymerisiert enthalten. Bevorzugt werden 3-Oxoalkyl(meth)acrylate und N-3-oxoalkyl-(meth)acrylamide sowie Methylvinylketon, Methacrolein und Acrolein.

Zur Herstellung der Copolymerisate (A) können auch andere funktionellen Gruppen enthaltende Monomere mitverwendet werden, z.B. solche mit Hydroxylgruppen, wie Hydroxyalkyl-(meth)acrylate, wie 2-Hydroxypropyl-acrylat und -methacrylat, 2-Hydroxyethyl-(meth)acrylat, 4-Hydroxybutyl-(meth)acrylat sowie polymerisierbare Carbonsäuren, z.B. Acrylsäure, Methacrylsäure und Maleinsäure.

Bevorzugt sind als Komponente (A) Copolymerisate von (Meth)acrylsäureestern und gegebenenfalls anderen mit (Meth)acrylsäureestern copolymerisierbaren olefinisch ungesättigten Verbindungen mit copolymerisierbaren Ketonen und/oder Aldehyden.

Derartige Copolymerisate (A) weisen im allgemeinen K-Werte, bestimmt nach DIN 53 726 von 10 bis 200, vorzugsweise 12 bis 30 auf.

Der Gehalt der Komponente (A) an Carbonylsauerstoff beträgt insbesondere 0,001 bis 12 Gewichtsprozent, vorzugsweise 0,1 bis 4 Gewichtsprozent.

(B) Komponente (B) besteht aus einem oder mehreren monofunktionellen Monoketonen und/oder Monoaldehyden, vorzugsweise solchen mit jeweils Siedepunkten von 30° C bis 200° C, z.B. aliphatische, cycloaliphatische, aromatische und/oder araliphatische Ketone und Aldehyde, wie Acetaldehyd, Propionaldehyd, Butyraldehyd, Benzaldehyd, Phenylacetaldehyd und Terpenaldehyde; oder als Ketone z.B. Dialkylketone, wie Aceton, Methylethylketon, Diethylketon, i-Propylmethylketon, n-Propylmethylketon, Di-i- und Di-n-propylketon, t-Butylmethylketon, i-Butylmethylketon, sec.-Butylmethylketon, Di-isobutylketon, cycloaliphatische Ketone, wie Cyclohexanon und aromatisch-aliphatische Ketone, wie Acetophenon. Bevorzugt werden Dialkylketone mit Siedepunkten von 50 bis 150° C verwendet.

(C) Geeignete Polyhydrazide (C) sind z.B. Dihydrazide organischer Di- und Oligocarbonsäuren. Als Beispiele seien genannt: Malonsäure-, Bernsteinsäure-, Glutarsäure-, Adipinsäure-, Pimelinsäure-, Korksäure-, Azelainsäure-, Sebacinsäure-, Undecandisäure-, Dodecandisäure-, Tridecandisäure-, Tetradecandisäure-, Pentadecandisäure-, Hexadecandisäure-, 2-Methyl-tetradecandisäuredihydrazid, ferner Methyl-, Ethyl-, Propyl-, Butyl-, Hexyl-, Heptyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octyl-bernsteinsäuredihydrazid, 2-Ethyl-3-propyl-bernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäure- und Benzylmalonsäuredihydrazid, Pentan-1.3.5-tricarbonsäuretrihydrazid, Hex-4-en-1,2,6-tricarbonsäuretrihydrazid, 3-Cyan-pentan-1,3,5-tricarbonsäuretrihydrazid, Dicyanfumarsäuredihydrazid, ferner die Di- bzw. Oligohydrazide von dimerisierten bzw. oligomerisierten ungesättigten Fettsäuren.

Geeignete organische Lösemittel sind beispielsweise die in der Lackindustrie üblichen, wie Alkohole mit 1 bis 10 C-Atomen Glykolether, Ester, aromatische cycloaliphatische und aliphatische Kohlenwasserstoffe, Chlorkohlenwasserstoffe, aber auch die Monoketone und/oder Aldehyde der Komponente (B), soweit sie in ihren lackanwendungstechnischen Eigenschaften, z.B. Siedepunkt und Lösevermögen geeignet sind, oder Gemische dieser Lösemittel.

Komponente (A) wird mit Komponente (C) im allgemeinen in solchen Mengen kombiniert, daß die Hydrazidgruppen der Komponente (C) zu Carbonylgruppen der Komponente (A) im Äquivalenzverhältnis von 0,1 zu 2, vorzugsweise 0,1 bis 1 eingesetzt werden.

Die Umsetzung der Komponenten (A), (B) und (C) erfolgt zweckmäßigerweise bei erhöhten Temperaturen von ca. 40 bis 120° C um eine gewünschte rasche Reaktion zu erhalten. Es kann auch zweckmäßig sein, die Umsetzung in Gegenwart katalytischer Säuremengen durchzuführen, z.B. saure Copolymerisate (A) zu verwenden, die einpolymerisierte Carboxylgruppen enthalten. Es können aber auch andere Säuren zugesetzt werden, z.B. p-Toluolsulfonsäure, Phthalsäure und Phosphorsäure.

Die Umsetzung erfolgt zweckmäßigerweise in Lösung oder Dispersion, um die meist hochviskosen Stoffe besser handhaben zu können. Man wird aber höhere Konzentrationen z.B. über 60 % vorziehen. Der Reaktionspartner (B), der in erheblichem äquivalenten Überschuß über die Komponenten (A) und (C) vorhanden sein kann, kann auch gleichzeitig Lösemittel oder Colösemittel sein.

Die erfindungsgemäßen in Lösung oder Dispersion organischer Lösemittel vorliegenden polymeren Zusammensetzungen sind bis über ein Jahr lagerstabil. Sie vernetzen nach dem Auftrag auf das zu überziehende Substrat und Abgabe des organischen Lösemittels bereits bei Raumtemperatur. Eine Erhöhung der Temperatur von z.B. bis zu 100° C beschleunigt die Vernetzungsreaktion.

Die erfindungsgemäßen gelösten bzw. dispergierten polymeren Zusammensetzungen eignen sich als Lacke und Beschichtungen dekorativer und/oder schützender Art auf harten und weichen Substraten, als Verklebungs- und Dichtungsmittel und als Vernetzer für handelsübliche Epoxidharze, wobei sie gegenüber üblichen Polyaminvernetzern den Vorteil deutlich längerer Topfzeit aufweisen.

Beispiel 1

In einem Reaktionsgefäß aus Glas wurden 100 g Methylisoamylketon und 100 g Xylol auf 125° C erwärmt. Innerhalb von 2 Stunden wurde eine Mischung von 490 g Ethylhexylacrylat, 105 g Acrylsäure, 105 g Diacetonacrylamid, 50 g Methylisoamylketon, 50 g Xylol und 21 g tert.-Butylperbenzoat zugegeben und dann das Reaktionsgemisch noch 3 Stunden bei 125 bis 130° C weitergerührt. Es resultierte eine Polymerlösung mit einem Gehalt an 70 Gew.% Polymer (A), das einen K-Wert nach DIN 53 726 von 15 aufwies.

Es wurde auf 70° C abgekühlt und 108 g Adipinsäurebishydrazid, sowie 110 g Cyclohexanon zugegeben und bei 70° C weitergerührt. Nach ca. 2 Stunden resultierte eine klare viskose Lösung.

Beispiel 2

Es wurde wie in Beispiel 1 beschrieben verfahren, aber anstatt 490 g Ethylhexylacrylat werden 290 g Methylmethacrylat und 200 g Ethylhexylacrylat eingesetzt und nach der Polymerisation wurde statt mit 108 g, mit 54 g Adipinsäurebishydrazid umgesetzt. Es resultierte ein vernetzbares polymeres System. Die erhaltene Polymerlösung wurde in einer Schichtdicke von ca. 65 $\mu$m auf entfettetes Stahlblech aufgerakelt und 2 Stunden bei 60° C getrocknet. Man erhielt einen harten Überzug mit folgenden Kenndaten:
Pendelhärte nach DIN 53 157 183s
Erichsen-Tiefung nach DIN 53 156 8,5"
Gitterschnitt nach DIN 53 151 0-1

Beispiel 3

112 g 2-Ethylhexylacrylat, 14 g Vinylpropionat, 6 g Maleinsäuremonobutylester, 5 g Acrylsäure und 1,4 g Diacetonacrylamid wurden unter Zusatz von 0,01 Teilen Azoisobutyronitril bei 85 bis 90° C in 169 g Benzin 65/95 polymerisiert. Man erhielt eine Lösung eines Copolymerisats vom K-Wert 68.

Es wurden 10 g Aceton und 4 g des Umsetzungsproduktes laut Beispiel 1 zugegeben. Es resultierte eine klare stabile Lösung. Die Lösung wurde auf eine Folie aus Polyethylenglykolterephthalat in einer Schicht von ca. 25 $\mu$m Dicke aufgerakelt und 1 Minute bei 70° C getrocknet. Man erhielt eine Klebefolie die an glatten Flächen sehr gut haftete.

Die Klebeeigenschaften von flächigen Substraten, die eine Haftklebebeschichtung aufweisen, kann durch Messen der Scherfestigkeit als Maß für die Kohäsion und der Schälfestigkeit als zusammenfassendes Maß für Kohäsion und Oberflächenklebrigkeit erfaßt werden. Für die Prüfung wurden die getrockneten, beschichteten Folien in 2 cm breite Streifen geschnitten und diese Streifen auf eine verchromte Messingplatte aufgebracht. Die Platte wurde dann mit den Streifen 24 Stunden bei 23° C und 65 % relativer Luftfeuchtigkeit gelagert.

Zur Messung der Schälfestigkeit wurden die Prüfstreifen parallel zur Klebeschicht mit einer Geschwindigkeit von 300 mm/min rückwärts abgezogen. Die hierfür erforderliche Kraft wurde gemessen.

Bei der Messung der Scherfestigkeit wurde eine verklebte Fläche von 20 × 45 mm zurechtgeschnitten, die Platte senkrecht eingespannt und der überhängende Teil des Klebestreifens mit einem Gewicht von 1 kg belastet. Es wurde die Zeit bestimmt, bis sich die Verklebung löst. Die Messung wurde bei 23° C durchgeführt. Alle Messungen wurden 3fach durchgeführt.

Es wurden folgende Klebeeigenschaften gemessen:
Kohäsion: >120 Stunden
Schälfestigkeit: 4,9 N/2 cm

Beispiel 4

18,5 g eines Epoxidharzes auf Basis Bisphenol A mit einem mittleren Molekulargewicht von 370 (z.B. wie es unter dem Handelsnamen Epikote® 828 der Firma Shell) und 400 g des Umsetzungsproduktes nach Beispiel 1 wurden gemischt. Die Mischung hatte eine Topfzeit (Lagerzeit bei Raumtemperatur bis zum Angelieren) von über 15 Stunden. Beim Auftragen auf entfettetes Stahlblech erhielt man nach 48 Stunden zähelastische gut haftende Beschichtungen.

**Patentansprüche**

**Patentansprüche für folgende Vertragsstaaten : DE, ES, FR, GB, IT, NL, SE**

1. In Lösung oder Dispersion eines oder mehrerer organischer Lösemittel lagerstabile, nach Lösemittelabgabe bei Raumtemperatur oder bei Erwärmen vernetzende polymere Zusammensetzungen, dadurch gekennzeichnet, daß sie durch Umsetzung von

   (A) polymeren organischen Verbindungen mit Carbonylgruppen,
   in Gegenwart von
   (B) Monoketonen und/oder Monoaldehyden mit
   (C) Polyhydraziden
   erhalten worden sind.

2. Zusammensetzungen nach Anspruch 1, dadurch gekennzeichnet, daß man als Komponente (A) Copolymerisate von (Meth)-acrylsäureestern und gegebenenfalls anderen mit (Meth)acrylsäureestern copolymerisierbaren olefinisch ungesättigten Verbindungen mit copolymerisierbaren Ketonen und/oder Aldehyden einsetzt.

3. Zusammensetzungen nach Anspruch 1 oder 2, dadurch gekennzeichnet, daß man die Polyhydrazide (C) in einem Äquivalenzverhältnis, bezogen auf die Carbonylgruppen der Komponente (A) von 0,1 bis 2 einsetzt.

4. Verwendung der Zusammensetzungen nach einem der Ansprüche 1 bis 3 als Vernetzer für polymere organische Verbindungen mit Carbonylgruppen.

5. Verwendung der Zusammensetzung nach einem der Ansprüche 1 bis 3 als Vernetzer für Polyepoxidverbindungen.

**Patentansprüche für folgende Vertragsstaat : AT**

1. Verfahren zur Herstellung von in Lösung oder Dispersion eines oder mehrerer organischer Lösemittel lagerstabilen, nach Lösemittelabgabe bei Raumtemperatur oder bei Erwärmen vernetzenden polymeren Zusammensetzungen, dadurch gekennzeichnet, daß man

(A) polymere organische Verbindungen mit Carbonylgruppen,
in Gegenwart von
(B) Monoketonen und/oder Monoaldehyden mit
(C) Polyhydraziden
umsetzt.

2. Verfahren nach Anspruch 1, dadurch gekennzeichnet, daß man als Komponente (A) Copolymerisate von (Meth)acrylsäureestern und gegebenenfalls anderen mit (Meth)acrylsäureestern copolymerisierbaren olefinisch ungesättigten Verbindungen mit copolymerisierbaren Ketonen und/oder Aldlehyden einsetzt.

3. Verfahren nach Anspruch 1 oder 2, dadurch gekennzeichnet, daß man die Polyhydrazide (C) in einem Äquivalenzverhältnis, bezogen auf die Carbonylgruppen der Komponente (A) von 0,1 bis 2 einsetzt.

4. Verwendung der Zusammensetzungen nach einem der Ansprüche 1 bis 3 als Vernetzer für polymere organische Verbindungen mit Carbonylgruppen.

5. Verwendung der Zusammensetzung nach einem der Ansprüche 1 bis 3 als Vernetzer für Polyepoxidverbindungen.

## Claims
## Claims for the following Contracting States : DE, ES, FR, GB, IT, NL, SE

1. A polymeric composition which has a long shelf life when dissolved or dispersed in one or more organic solvents, undergoes crosslinking at room temperature or on heating after the solvent has been released, and is obtained by reacting
(A) polymeric organic compounds containing carbonyl groups
in the presence of
(B) monoketones and/or monoaldehydes with
(C) polyhydrazides.

2. A composition as claimed in claim 1, wherein copolymers of (meth)acrylates, and if required other olefinically unsaturated compounds which are copolymerizable with (meth)acrylates, with copolymerizable ketones and/or aldehydes are used as component (A).

3. A composition as claimed in claim 1 or 2, wherein the polyhydrazides (C) are used in an amount such that the ratio of the number of equivalents is from 0.1 to 2, based on the carbonyl groups of component (A).

4. The use of a composition as claimed in any of claims 1 to 3, as a crosslinking agent for polymeric organic compounds containing carbonyl groups.

5. The use of a composition as claimed in any of claims 1 to 3 as a crosslinking agent for polyepoxide compounds.

## Claims for the following Contracting State : AT

1. A process for preparing a polymeric composition which has a long shelf life when dissolved or dispersed in one or more organic solvents, undergoes crosslinking at room temperature or on heating after the solvent has been released, which comprises reacting
(A) polymeric organic compounds containing carbonyl groups
in the presence of
(B) monoketones and/or monoaldehydes with
(C) polyhydrazides.

2. A process as claimed in claim 1, wherein copolymers of (meth)acrylates, and if required other olefinically unsaturated compounds which are copolymerizable with (meth)acrylates, with copolymerizable ketones and/or aldehydes are used as component (A).

3. A process as claimed in claim 1 or 2, wherein the polyhydrazides (C) are used in an amount such that the ratio of the number of equivalents is from 0.1 to 2, based on the carbonyl groups of component (A).

4. The use of a composition as claimed in any of claims 1 to 3, as a crosslinking agent for polymeric organic compounds containing carbonyl groups.

5. The use of a composition as claimed in any of claims 1 to 3 as a crosslinking agent for polyepoxide compounds.

## Revendications

**Revendications pour les Etats contractants suivants : DE, ES, FR, GB, IT, NL, SE**

1. Compositions polymères stables au stockage en solution ou dispersion dans un ou plusieurs solvants organiques, à effet réticulant à température ordinaire ou par léger chauffage après avoir cédé le ou les solvant(s), caractérisées par le fait qu'elles ont été obtenues par réaction

   (A) de composés organiques polymères à groupes carbonyle,
   en présence
   (B) de monocétones et/ou monoaldéhydes avec
   (C) des polyhydrazides.

2. Compositions selon la revendication 1, caractérisées par le fait que l'on utilise, comme composant (A), des copolymérisats d'esters d'acide (méth)acrylique et éventuellement d'autres composés à insaturation oléfinique, copolymérisables avec des esters d'acide (méth)acrylique, avec des cétones et/ou aldéhydes copolymérisables.

3. Composition selon les revendications 1 ou 2, caractérisées par le fait que l'on utilise les polyhydrazides (C) dans un rapport en équivalence de 0,1 à 2, rapporté aux groupes carbonyle du composant (A).

4. Utilisation des compositions selon l'une des revendications 1 à 3 comme réticulants pour des composés organiques polymères à groupes carbonyle.

5. Utilisation de la composition selon l'une des revendications 1 à 3 comme réticulant pour des composés polyépoxy.

**Revendications pour l'Etat contractant suivant : AT**

1. Procédé de préparation de compositions polymères stables au stockage, en solution ou dispersion dans un ou plusieurs solvants organiques, à effet réticulant, à température ordinaire ou par léger chauffage, après avoir cédé le ou les solvant(s), caractérisé par le fait qu'on fait réagir

   (A) des composés organiques polymères à groupes carbonyle,
   en présence
   (B) de monocétones et/ou monoaldéhydes avec
   (C) des polyhydrazides.

2. Procédé selon la revendication 1, caractérisées par le fait que l'on utilise, comme composants (A), des copolymérisats d'esters d'acide (méth)acrylique et éventuellement d'autres composés à insaturation oléfinique, copolymérisables avec des esters d'acide (méth)acrylique, avec des cétones et/ou aldéhydes copolymérisables.

3. Procédé selon la revendication 1 ou 2, caractérisées par le fait que l'on utilise les polyhydrazides (C) dans un rapport en équivalence de 0,1 à 2, rapporté aux groupes carbonyle des composants (A).

4. Procédé selon l'une des revendications 1 à 3 comme réticulants pour des composés organiques polymères à groupes carbonyle.

5. Procédé selon l'une des revendications 1 à 3 comme réticulants pour des composés polyépoxy.